(19) **Europäisches Patentamt**
**European Patent Office**
**Office européen des brevets**

(11) **EP 3 642 697 B1**

(12) **EUROPÄISCHE PATENTSCHRIFT**

(45) Veröffentlichungstag und Bekanntmachung des Hinweises auf die Patenterteilung:
**23.08.2023 Patentblatt 2023/34**

(21) Anmeldenummer: **18734147.4**

(22) Anmeldetag: **18.06.2018**

(51) Internationale Patentklassifikation (IPC):
**G06F 3/01** (2006.01)

(52) Gemeinsame Patentklassifikation (CPC):
**G06F 3/017**

(86) Internationale Anmeldenummer:
**PCT/EP2018/066139**

(87) Internationale Veröffentlichungsnummer:
**WO 2018/234251 (27.12.2018 Gazette 2018/52)**

(54) **VERFAHREN UND VORRICHTUNG ZUM ERFASSEN EINER NUTZEREINGABE ANHAND EINER GESTE**

METHOD AND DEVICE FOR DETECTING A USER INPUT ON THE BASIS OF A GESTURE

PROCÉDÉ ET DISPOSITIF DE DÉTECTION D'UNE ENTRÉE UTILISATEUR EN FONCTION D'UN GESTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.06.2017 DE 102017210317**

(43) Veröffentlichungstag der Anmeldung:
**29.04.2020 Patentblatt 2020/18**

(73) Patentinhaber: **Volkswagen Aktiengesellschaft 38440 Wolfsburg (DE)**

(72) Erfinder:
- **ETTE, Bernd**
  **38442 Wolfsburg (DE)**
- **WINTSCHE, Volker**
  **01099 Dresden (DE)**
- **GAIDA, Christian**
  **01705 Freital (DE)**

(74) Vertreter: **Bals & Vogel Patentanwälte PartGmbB Konrad-Zuse-Str. 4 44801 Bochum (DE)**

(56) Entgegenhaltungen:
**US-A1- 2012 068 917**

EP 3 642 697 B1

**Beschreibung**

Die vorliegende Erfindung betrifft ein Verfahren zum Erfassen einer Nutzereingabe anhand einer Geste. Sie betrifft ferner eine Vorrichtung zum Erfassen einer Nutzereingabe anhand einer Geste.

Die Vielzahl elektronischer Einrichtungen, die in weiten Teilen des privaten und beruflichen Lebens eingesetzt werden, macht die Entwicklung von Technologien zu ihrer einfachen Bedienung zu einer vordringlichen Aufgabe. Ein Ansatz dafür ist die Bedienung mittels einer Gestensteuerung, wobei hier weiterhin Herausforderungen bestehen, um eine im Alltag bequem nutzbare Eingabemöglichkeit zu schaffen.

Bei dem in der DE 44 38 643 A1 beschriebenen Verfahren zur Objekterkennung mittels Ultraschall werden Werkstücke lokalisiert und erkannt. Dazu werden unterschiedliche Reflexionsprofile bestimmt, deren Vergleich Aussagen über die Geometrie der Objektoberfläche erlaubt. Der Verlauf der Profile weist ferner Merkmale auf, die zur Klassifikation und Erkennung der Werkstücke herangezogen werden.

Die DE 198 02 261 A1 schlägt ein Verfahren zur Signalverarbeitung von Zeitfolgen digitalisierter Bilder vor, bei dem Objekte erkannt werden und ihre Bewegung analysiert wird. Dazu werden neuronale Netze mit Zeitverzögerung verwendet.

Das in der DE 10 2015 103 022 A1 beschriebene Verfahren zum Erkennen eines bekannten Objekts in einem Sehfeld eines dreidimensionalen Maschinensichtsystems sieht vor, dass anhand einer Bilddatei in zwei Schritten Merkmale bestimmt werden, wobei in den Schritten der relevante Suchraum für den Abgleich mit bekannten Objekten verkleinert und die Suche auf diese Weise erleichtert wird. insbesondere werden Histogramme verwendet, um eine Verteilung von Farben und Randrichtungen aus der Bilddatei zu extrahieren, ferner werden Formfunktionen ermittelt.

Bei dem in der DE 60 2004 004 048 T2 beschriebenen Verfahren zur Objekterkennung wird ein Bild abgetastet, wobei die Größe eines bei der Abtastung verwendeten Fensters variiert wird, um Objekte verschiedener Größen zu detektieren. Bei der Entscheidung, ob ein Objekt erkannt wird, werden anhand der Fenstergrößen mehrere Schätzungen berechnet und verglichen.

Bei dem in der WO 2012/088702 A1 beschriebenen Verfahren zur Bereitstellung eines Mechanismus zur Gestenerkennung wird eine Folge von Bildern in Blöcke unterteilt und es wird ein Bewegungsstatus für die Blöcke bestimmt. Um die Bewegungsrichtung eines Objekts zu ermitteln, wird die Bewegung von Rändern in einem Histogramm betrachtet, welches anhand des Bewegungsstatus der Blöcke erzeugt wird.

Die WO 2013/085525 A1 schlägt Techniken zur Gestenerkennung vor, bei denen durch eine Stereo-Erfassung die Zahl der zu analysierenden Pixel in erfassten Bildern verringert wird. Dazu wird beispielsweise eine Bildregion bestimmt, in der eine Bewegung eines Objekts erkannt werden soll.

Ein System und Verfahren zur Gestenerkennung, das Videos einer sich bewegenden Hand aufnimmt und Gesten basieren auf der Eingabesequenz erkennt. In jedem Bild wird der Handbereich vom Hintergrund segmentiert und zur Schätzung der Parameter aller fünf Finger verwendet. Das System klassifiziert das Handbild als eine der Körperhaltungen in der vordefinierten Datenbank und wendet einen geometrischen Klassifizierungsalgorithmus an, um die Geste zu erkennen.

Ein limitierender Faktor bei den bekannten Verfahren ist allerdings häufig, dass für eine zuverlässige Erkennung einer erfassten Geste erhebliche Rechenleistung aufgewandt werden muss, die insbesondere in mobilen Geräten, etwa im Bereich der Fahrzeugtechnik, oft nicht zur Verfügung steht.

Der vorliegenden Erfindung liegt daher die Aufgabe zugrunde, ein Verfahren und eine Vorrichtung der eingangs genannten Art bereitzustellen, die eine schnelle, zuverlässige und wenig rechenintensive Erkennung von Gesten ermöglichen.

Erfindungsgemäß wird diese Aufgabe durch ein Verfahren mit den Merkmalen des Anspruchs 1 und eine Vorrichtung mit den Merkmalen des Anspruchs 15 gelöst. Vorteilhafte Ausgestaltungen und Weiterbildungen ergeben sich aus den abhängigen Ansprüchen.

Bei dem erfindungsgemäßen Verfahren zum Erfassen einer Nutzereingabe anhand einer Geste werden Bilddaten erfasst. Anhand der erfassten Bilddaten wird eine Segmentierung durchgeführt, wobei ein Objekt mit einer Umrisslinie bestimmt wird. Anhand des Objekts wird ein Referenzpunkt bestimmt und für eine Vielzahl von Punkten auf der Umrisslinie des Objekts wird jeweils ein Abstand zu dem Referenzpunkt bestimmt. Anhand der Abstände wird ein gemessenes Abstandsprofil erzeugt und anhand des gemessenen Abstandsprofils wird eine Geste bestimmt. Anhand der bestimmten Geste wird ein Ausgabesignal erzeugt und ausgegeben.

Die Erkennung der Geste erfolgt dabei vorteilhafterweise anhand eines gemessenen Abstandsprofils, das anhand besonders einfache Merkmale charakterisiert werden kann. Dies führt dazu, dass das Verfahren besonders schnell und ressourcenschonend auch mit wenig Rechenleistung ausgeführt werden kann. Zudem können Bilddaten mit einer besonders niedrigen Auflösung zur Gestenerkennung verwendet werden.

Unter einer "Geste" wird im Sinne der Erfindung eine bestimmte Stellung eines Eingabeobjekts, beispielsweise einer Hand oder eines anderen Körperteils eines Nutzers, oder eine bestimmte Bewegung, die mit dem Eingabeobjekt ausgeführt wird, verstanden. Dabei wird insbesondere die Position und/oder Orientierung des Eingabeobjekts im Raum berücksichtigt. Ferner kann vorgesehen sein, dass das Eingabeobjekt mehrere Elemente aufweist, beispielsweise die Finger einer Hand, die in einem bestimmten Maße unabhängig voneinander bewegbar sind, sodass zusätzlich zu der Stellung und/oder Bewegung des Eingabeobjekts auch die Position und Ausrichtung der Elemente des Eingabeobjekts berücksichtigt werden können. Das Eingabeobjekt kann ferner einen Gegenstand umfassen, der beispielsweise durch eine Hand eines Nutzers geführt und im Raum positioniert werden kann, beispielsweise ein Stift oder ein anderer Körper.

Die Gesten können nach an sich bekannter Art ausgestaltet sein. Sie umfassen insbesondere Zeigegesten, Wischgesten und solche Gesten, die im alltäglichen Gebrauch verwendet werden, zum Beispiel Handdrehungen, Greifgesten und Kombinationen mehrerer solcher gegebenenfalls unmittelbar kurz nacheinander ausgeführter Gesten. Durch die Gestensteuerung wird dem Nutzer daher eine besonders einfache und intuitive Eingabemöglichkeit bereitgestellt.

Die Gesten werden in einem Erfassungsraum ausgeführt, insbesondere ohne dass der Nutzer sich dabei einem bestimmten gegenständlichen Objekt nähern oder eine Berührung herstellen muss. In weiteren Ausführungsbeispielen ist vorgesehen, dass die Geste eine Berührung eines gegenständlichen Objekts umfasst, wobei die Geste insbesondere vollständig während der Berührung, etwa entlang einer berührungsempfindlichen Oberfläche, erfasst wird.

Die Geste kann ferner eine Richtungsinformation zugeordnet werden, die insbesondere anhand einer Richtung einer Bewegung beziehungsweise einer Ausrichtung der Geste bestimmt wird. Eine solche Geste kann analog zur Bedienung eines analogen Bedienelements gebildet sein, beispielsweise analog zum Schieben oder Drehen eines Bedienelements, wobei jedoch keine tatsächliche Verschiebung oder Drehung physischen eines Bedienelements erfolgt, sondern durch die Bewegung des Eingabeobjekts im Erfassungsraum ein solches Bewegungsmuster lediglich nachvollzogen wird. Derartige Gesten kann sich der Nutzer typischerweise besonders leicht merken. Ein solches Verfahren bietet zudem den Vorteil, dass der Nutzer nicht - wie beispielsweise bei einem Schalter oder Drehknopf - einen bestimmten Flächenbereich berühren muss. Es reicht vielmehr aus, dass er das Eingabeobjekt, etwa seine Hand, in den Erfassungsraum bewegt und dort die entsprechende Geste ausführt.

Bei einer Ausgestaltung des erfindungsgemäßen Verfahrens umfassen die erfassten Bilddaten ein zumindest teilweises Abbild einer Hand und die Geste entspricht einer Anzahl von gestreckten Fingern der Hand. Die Geste kann dadurch vorteilhafterweise mittels der Hand des Nutzers ausgeführt werden, sodass kein zusätzliches Eingabeobjekt verwendet werden muss. Die Geste ist ferner besonders einfach für den Nutzer durchführbar. Alternativ oder zusätzlich zur Berücksichtigung der Anzahl der gestreckten Finger können Gesten vorgesehen sein, bei denen ein bestimmter Finger, beispielsweise der Zeigefinger, oder mehrere Finger in Kombination gestreckt sind, beispielsweise gleichzeitig der Daumen und Zeigefinger oder der Zeige- und Mittelfinger einer Hand. In weiteren Ausführungsbeispielen können statt einer Hand und deren Fingern andere Eingabeobjekte verwendet werden.

Die Geste kann ferner in mehrere Phasen unterteilt sein, wobei insbesondere vorgesehen sein kann, dass zumindest eine Phase berührungslos im Erfassungsraum erfasst wird. Die Phasen können so gebildet sein, dass eine Bedienung mit mehreren Schritten implementiert wird. Beispielsweise kann die Geste eine erste Phase umfassen, die als Auswahl einer Funktion interpretiert wird, und zumindest eine weitere Phase, in der eine Einstellung mittels der ausgewählten Funktion vorgenommen wird.

Bei dem Verfahren werden zunächst Bilddaten erfasst, beispielsweise durch ein Kamerasystem. Dabei ist insbesondere ein Erfassungsraum definiert, etwa der räumliche Bereich, in dem durch das Kamerasystem Bilddaten erfassbar sind oder ein räumlicher Bereich, auf den die Erfassung oder die Auswertung der erfassten Bilddaten beschränkt wird.

Die Bilddaten umfassen räumlich aufgelöste Informationen, insbesondere über eine Vielzahl von Bildpunkten, die insbesondere in einer Matrix angeordnet sind. Diese Informationen können verschiedener Art sein, beispielsweise die Intensität oder ein anderes Merkmal einer detektierten elektromagnetischen Strahlung oder Informationen, die mittels Ultraschall erhalten werden. Die Bilddaten können ferner gleichzeitig oder nacheinander für die Bildpunkte erfasst werden, beispielsweise mittels eines Bildsensors mit einer Vielzahl von Bildpunkten oder mittels eines Scanners zur Erfassung der Bildpunkte nacheinander. Die Bilddaten können beispielsweise ein einem bestimmten Zeitpunkt zugeordnetes Einzelbild oder mehrere Einzelbilder umfassen. Insbesondere können zeitlich aufgelöste Videodaten in dem Erfassungsraum erfasst werden. Die Zuordnung eines Zeitpunktes zu einem Einzelbild erfolgt dabei auf an sich bekannte Weise, wobei auch einem durch einen Scanvorgang erzeugten Bild ein einzelner Zeitpunkt zugeordnet werden kann, obwohl die einzelnen Bildpunkte lediglich nacheinander erfasst wurden.

Ferner kann eine auf eine andere Weise gebildete Gestenerfassungseinrichtung vorgesehen sein, beispielsweise mit resistiver und/oder kapazitiver Fläche, über welche zumindest eine erste Phase einer Geste erfasst werden kann.

Bei der Erfassung der Bilddaten kann ferner eine an sich bekannte Signalaufbereitung durchgeführt werden, beispielsweise eine Verbesserung der Bildqualität, Glättung, Filterung, Kalibrierung oder andere Maßnahmen. Ferner können Bildinformationen eingelesen werden, beispielsweise über einen Zeitpunkt, einem Einzelbild zugeordnet ist.

Gemäß der beanspruchten Erfindung umfassen die Bilddaten Bildpunkte und den Bildpunkten sind Distanzinformationen zugeordnet. Dadurch kann das Eingabeobjekt innerhalb der Bilddaten besonders sicher erkannt werden.

Insbesondere kann vorgesehen sein, dass die Bilddaten mittels einer *Time-of-Flight-Kamera* (ToF-Kamera) erfasst werden. Dabei wird ein Lichtimpuls, typischerweise im Infrarotbereich, ausgesendet und das von Objekten innerhalb eines Erfassungsraums reflektierte Licht wird detektiert. Die Lichtquelle und der Detektor sind dabei typischerweise dicht beieinander angeordnet. Es wird ein Zeitversatz zwischen dem Senden und Empfangen des Lichtimpulses sowie daraus folgend die Distanz des Objekts relativ zur Kamera bestimmt. Auf diese Weise können für jeden Bildpunkt Distanzinformationen erfasst werden.

Dies erlaubt ferner eine Filterung der erfassten Bilddaten anhand der Distanzinformationen, beispielsweise um nur Bilddaten innerhalb einer bestimmten Entfernung zu berücksichtigen und etwa einen detektierten Hintergrund zu verwerfen. Dadurch kann der Erfassungsraum, in dem die Geste erfasst wird, genau vorgegeben werden, wobei dieser insbesondere dynamisch bestimmt wird, beispielsweise nachdem in einem ersten Schritt eine Schätzung des Abstands des Eingabeobjekts zu dem Sensor erfolgt ist. Bildpunkte mit Distanzinformationen, die auf eine Reflexion durch ein Objekt außerhalb des definierten Erfassungsraums hinweisen, können auf diese Weise ausgefiltert werden. Verglichen mit anderen Systemen können zudem auch Objekte mit geringer Reflektivität sicher erkannt werden, da die Empfindlichkeit typischer ToF-Systeme zum Detektieren einer schwachen Reflexion ausreicht.

In weiteren Ausführungsbeispielen können die Bilddaten mit Distanzinformationen mittels anderer Verfahren erfasst werden, beispielsweise mittels Ultraschall oder einer Stereokamera.

Anhand der erfassten Bilddaten wird eine Segmentierung durchgeführt, bei der ein Objekt mit einer Umrisslinie bestimmt wird. Unter "Segmentierung" wird erfindungsgemäß die Bestimmung zusammengehöriger Bildbereiche verstanden. Insbesondere werden dabei solche Bilddaten berücksichtigt, die dem gleichen Zeitpunkt zugeordnet sind, beispielsweise die Bilddaten eines Einzelbildes. Dieses umfasst insbesondere Bildpunkte *(picture elements,* Pixel), die etwa als Matrix angeordnet sind. Bei der Segmentierung werden dann auf an sich bekannte Weise zusammengehörige Bildpunkte bestimmt, die insbesondere einen zusammenhängenden Bereich innerhalb eines Einzelbildes bilden und als ein Objekt betrachtet werden. Für das Objekt wird eine Umrisslinie bestimmt, wobei der Verlauf der äußersten Bildpunkte bestimmt wird. Beispielsweise repräsentiert ein bei der Segmentierung erkanntes Objekt eine Abbildung eines Eingabeobjekts.

Bei der Segmentierung können ferner nicht zu detektierende Objekte bestimmt werden, das heißt Bereiche innerhalb der Bilddaten, die keinem Eingabeobjekt zuzuordnen sind und die keinen Beitrag zur Erkennung einer Geste leisten. Derartigen Objekten zugeordnete Bildpunkte können ausgefiltert werden, insbesondere mittels eines mehrstufigen Verfahrens. Dies erfolgt auf an sich bekannte Weise, beispielsweise anhand von oberen und/oder unteren Schwellenwerten für die Fläche oder andere Merkmale des Objekts. Ferner können weitere Elemente der Bilddaten ausgefiltert werden, beispielsweise das Handgelenk und der Arm bei einer mittels einer Hand ausgeführten Geste.

Bei einer weiteren Ausbildung wird ein Neigungswinkel des Objekts bestimmt und eine Ausgleichstransformation für das Objekt ausgeführt. Dadurch kann vorteilhafterweise eine Korrektur einer Rotation des Objekts ausgeführt und die Erkennung einer Geste erleichtert werden. Insbesondere ist das Objekt eine Hand, wobei der Neigungswinkel hier beispielsweise anhand der Position eines Handgelenks relativ zu den übrigen Bereichen des detektierten Objekts bestimmt werden kann.

In einem weiteren Schritt wird anhand des Objekts ein Referenzpunkt bestimmt. Dabei kann insbesondere die von dem Objekt eingenommene Fläche und/oder der Verlauf der Umrisslinie berücksichtigt werden.

Gemäß der beanspruchten Erfindung ist der Referenzpunkt der geometrische Schwerpunkt des Objekts, insbesondere der geometrische Flächenschwerpunkt des Objekts. Dies erleichtert vorteilhafterweise die reproduzierbare Bestimmung des Referenzpunkts.

Beispielsweise kann der Flächenschwerpunkt $\vec{s}$ eines Objekts mit m Bildpunkten, die gleich gewichtet sind und denen jeweils ein Vektor $\vec{x_l}$ zugeordnet ist, nach der folgenden Formel berechnet werden:

$$\vec{s} = \frac{1}{m} \sum_{l=1}^{m} \vec{x_l}$$

Ausgehend von dem Referenzpunkt wird nun ein Abstandsprofil erzeugt, das den Abstand der Umrisslinie des Objekts zu dem Referenzpunkt umfasst. Dazu kann beispielsweise ein Zeiger definiert werden, der ausgehend von dem Referenzpunkt zu einem Punkt auf der Umrisslinie reicht, und es kann die Länge des Zeigers bestimmt werden. Um das Abstandsprofil zu erzeugen kann dieser Zeiger für eine Vielzahl von Punkten entlang der Umrisslinie erzeugt und gemessen werden, wobei das Abstandsprofil insbesondere eine Parametrisierung der Umrisslinie in Polarkoordinaten ausgehend von dem Referenzpunkt umfasst, das heißt, das Abstandsprofil gibt die Entfernung eines Punktes auf der Umrisslinie von dem Referenzpunkt in Abhängigkeit von einem Winkel des Zeigers an. Das Abstandsprofil wird insbesondere so erzeugt, dass der Winkel des Zeigers auf eine bestimmte Weise definiert ist, beispielsweise indem ein senkrecht nach oben weisender Zeiger einen Winkel von 0° einnimmt, während ein senkrecht nach unten weisender Zeiger einen Winkel von 180° einnimmt. Zur Bestimmung des Abstandsprofils kann der Winkel des Zeigers beispielweise die Winkel von 0° bis 360° im Uhrzeigersinn durchlaufen.

Bei weiteren Ausführungsformen kann eine andere Erzeugung des Abstandsprofils vorgesehen sein, insbesondere mittels einer andersgearteten Parametrisierung der Umrisslinie des Objekts. Zum Beispiel können die Punkte auf der Umrisslinie äquidistant entlang der Umrisslinie angeordnet sein.

Ferner kann vorgesehen sein, dass eine Glättung und oder Filterung der Daten des Abstandsprofils durchgeführt wird, beispielsweise durch einen gleitenden Durchschnitt oder eine andere Filterung zur Unterdrückung von hochfrequenten Schwankungen und/oder Rauschen.

Bei einer Ausbildung der Erfindung wird eine Fläche des Objekts bestimmt und das gemessene Abstandsprofil wird anhand der bestimmten Fläche normiert. Dadurch kann die Erkennung von Gesten vorteilhafterweise unabhängig von der tatsächlichen Größe des Objekts erfolgen, beispielsweise unabhängig von der Größe der Hand, mit welcher die Geste durchgeführt wird.

Zur Normierung kann beispielsweise ein Flächenkreis bestimmt werden, dessen Mittelpunkt mit dem Referenzpunkt zusammenfällt und dessen Radius r so bestimmt wird, dass die Fläche $A_{Kreis}$ des Flächenkreises mit der Fläche $A_{Obj}$ des Objekts übereinstimmt:

$$A_{Kreis} = \pi * r^2 = A_{Obj}; \quad r = \sqrt{\frac{A_{Obj}}{\pi}}$$

Der Abstand eines Punktes auf der Umrisslinie des Objekts zu dem Referenzpunkt kann in diesem Fall relativ zu dem Radius r angegeben werden, etwa durch eine Multiplikation mit dem Normierungsfaktor $\frac{1}{r}$ . In diesem Fall weisen Werte oberhalb von 1 darauf hin, dass die Umrisslinie an einer Position weiter von dem Referenzpunkt entfernt ist als der Radius des Flächenkreises, während umgekehrt Werte unterhalb von 1 darauf hinweisen, dass die Umrisslinie innerhalb des Flächenkreises verläuft.

Anhand des gemessenen Abstandsprofils wird eine Geste bestimmt, wobei diese Bestimmung auf unterschiedliche Weisen erfolgen kann.

Bei einer weiteren Ausbildung werden geometrische Profilmerkmale des gemessenen Abstandsprofils bestimmt und die Geste wird anhand der geometrischen Profilmerkmale bestimmt. Dies erlaubt vorteilhafterweise eine besonders einfache, geometrische Extraktion wesentlicher Merkmale des Abstandsprofils.

Geometrische Profilmerkmale können beispielsweise die Anzahl und Lage von Extremwerten und/oder Wendepunkten des Abstandsprofils sein. Die Bestimmung der Profilmerkmale erfolgt insbesondere nach Art einer an sich bekannten Kurvendiskussion, bei welcher charakteristische Merkmale einer mathematischen Kurve bestimmt werden.

Die Zuordnung der bestimmten geometrischen Profilmerkmale zu einer Geste kann auf unterschiedliche Weise erfolgen. Beispielsweise kann bei einer Ausführungsform vorgesehen sein, dass die Anzahl der Maxima des Abstandsprofils einer Geste zugeordnet wird, beispielsweise wenn eine Geste durch eine bestimmte Zahl gestreckter Finger charakterisiert ist und die Anzahl der Maxima ebendieser Anzahl entspricht. Alternativ oder zusätzlich können beispielsweise Abstände zwischen zwei Extrema zur Zuordnung einer Geste verwendet werden, beispielsweise um zu erkennen, ob zwei nebeneinander angeordnete Finger einer Hand gestreckt sind, oder die Ableitung des Abstandsprofils kann verwendet werden, um weitere charakteristische Profilmerkmale zu bestimmen.

Bei einer Weiterbildung wird die Geste anhand eines Profilvergleichs bestimmt, bei dem das gemessene Abstandsprofil mit einer Vielzahl von Referenz-Abstandsprofilen verglichen wird, wobei den Referenz-Abstandsprofilen jeweils eine Geste zugeordnet ist. Dadurch können vorteilhafterweise bestimmte Gesten vorgegeben und auch komplexe Gesten erkannt werden.

Die Referenz-Abstandsprofile können beispielsweise durch einen Hersteller bei der Auslieferung einer Vorrichtung zur Ausführung des erfindungsgemäßen Verfahrens vorgegeben oder zu einem späteren Zeitpunkt bereitgestellt werden. Alternativ oder zusätzlich können Eingabemöglichkeiten vorgesehen sein, um beispielsweise neue Referenz-Abstandsprofile von einem Nutzer zu erfassen und zu speichern, etwa um eine neue Geste zu erlernen oder die Erkennung einer bereits bekannten Geste zu verbessern.

Bei einer Ausbildung werden für die Referenz-Abstandsprofile geometrische Referenzmerkmale bestimmt und der Profilvergleich wird anhand der Referenzmerkmale und der Profilmerkmale des gemessenen Abstandsprofil durchgeführt.

Die Referenz-Abstandsprofile können auf unterschiedliche Weisen bereitgestellt werden. Beispielsweise kann das gemessene Abstandsprofil eine bestimmte Auflösung, das heißt insbesondere eine bestimmte Anzahl von Punkten des Abstandsprofils, aufweisen. Die Referenz-Abstandsprofile können mit der gleichen oder einer anderen Auflösung bereitgestellt werden; alternativ oder zusätzlich können sie Referenzmerkmale umfassen, die insbesondere nach Art der oben beschriebenen für das gemessene Abstandsprofilen bestimmten Profilmerkmale bestimmt werden. Indem die Referenzmerkmale direkt bereitgestellt werden, muss für den Profilvergleich keine neue Analyse der Referenz-Abstandsprofile erfolgen. Ferner kann so die Komplexität des Profilvergleichs weiter vermindert werden.

Der Profilvergleich kann entsprechend so erfolgen, dass die bereitgestellten Daten der Referenz-Abstandsprofile und das gemessene Abstandsprofil besonders effizient und ohne unnötigen Rechenaufwand genutzt werden können.

Bei einer weiteren Ausbildung werden zumindest zwei Extremwerte des gemessenen Abstandsprofil bestimmt und der Profilvergleich erfolgt anhand der bestimmten Extremwerte des gemessenen Abstandsprofils. Dadurch kann der Profilvergleich vorteilhafterweise besonders einfach und mit entsprechend geringer Rechenleistung erfolgen.

Beispielsweise können bei dem Profilvergleich die Anzahl, Lage und/oder Amplitude der Extremwerte berücksichtigt werden. Diese Parameter sind besonders einfach bestimmbar und charakterisieren das gemessene Abstandsprofil sowie die Referenz-Abstandsprofile. Der Profilvergleich kann daher besonders einfach durchgeführt werden. Insbesondere können die für den Profilvergleich benötigten Daten, beispielsweise über die Extremwerte, für die Referenz-Abstandsprofile bereits vorverarbeitet und gespeichert sein, sodass keine erneute Analyse der Referenz-Abstandsprofile notwendig ist.

Bei einer Weiterbildung wird eine erste Ableitung des Abstandsprofils bestimmt und der Profilvergleich erfolgt anhand der bestimmten Ableitung. Dabei kann ferner eine zweite Ableitung bestimmt werden. Dadurch können vorteilhafterweise zusätzliche relevante Parameter des Abstandsprofils ermittelt und die Zuordnung zur einem Referenzprofil erleichtert werden. Insbesondere können geometrische Profilmerkmale anhand der ersten und/oder zweiten Ableitung bestimmt werden, etwa die Anzahl und Lage von Extremwerten und/oder Wendepunkte des Abstandsprofils.

Bei einer Ausbildung wird der Profilvergleich anhand eines Maschinenlernverfahrens, beispielsweise anhand eines neuronalen Netzes, durchgeführt. Dadurch kann der Vergleich vorteilhafterweise besonders genau durchgeführt werden. Insbesondere kann die Klassifikation und die Erkennung einer Geste anhand des Abstandsprofils und des Profilvergleichs mittels Trainingsdaten verbessert werden.

Ferner kann vorgesehen sein, dass anhand eines bestimmten Abstandsprofils eine neue Geste gelernt wird. Dies kann auf unterschiedliche, an sich bekannte Weisen erfolgen, beispielsweise indem anhand eines gemessenen Abstandsprofils oder einer Vielzahl von gemessenen Abstandsprofilen ein neues Referenzprofil erzeugt wird, welches einer bestimmten Geste zugeordnet ist und deren Erkennung erlaubt oder verbessert. Ferner kann ein Maschinenlernverfahren verwendet werden, etwa um mittels eines neuronalen Netzes eine neue Geste zu erlernen.

Bei einer weiteren Ausbildung umfassen die erfassten Bilddaten eine, insbesondere zeitlich geordnete, Folge von Bildern und es wird eine, insbesondere zeitlich geordnete, Folge von gemessenen Abstandsprofilen erzeugt. Dabei wird die Geste anhand der Folge von gemessenen Abstandsprofilen bestimmt.

Eine Folge von Bildern kann beispielsweise anhand von Videodaten erfasst werden. Insbesondere umfasst die Bilderfolge Einzelbilder, die jeweils einem Zeitpunkt zugeordnet sind. Dabei können die Zeitpunkte insbesondere äquidistant und aufeinanderfolgend angeordnet sein. Bei dem Verfahren kann für jedes der Einzelbilder jeweils ein individuelles Abstandsprofil erzeugt werden. Dabei kann insbesondere jeweils ein neuer Referenzpunkt für jedes einzelne Bild bestimmt werden. Alternativ oder zusätzlich kann eine Auswertung der Bilderfolge so erfolgen, dass ein gemeinsamer Referenzpunkt für zumindest zwei Einzelbilder bestimmt wird. Ferner kann eine Normierung des Abstandsprofils, beispielsweise anhand des oben beschriebenen Flächenkreises, erfolgen, wobei die Normierung ebenfalls für die individuellen Einzelbilder oder für zumindest zwei Einzelbilder erfolgen kann.

Während bei der Berücksichtigung eines Einzelbildes als Geste eine bestimmte Stellung eines Eingabeobjekts, beispielsweise einer Stellung einer Hand und einzelner Finger, berücksichtigt werden kann, kann bei der Auswertung einer Folge von Einzelbildern eine Veränderung dieser Stellung ausgewertet werden. Beispielsweise kann eine Lageänderung, der Position, eines Winkels des Eingabeobjekts berücksichtigt werden.

Bei einer Weiterbildung umfasst die Geste eine Bewegung einer Hand, beispielsweise eine Veränderung der Lage der gesamten Hand oder einzelner Finger, ein Strecken oder Beugen von Fingern, eine Rotation und/oder eine Positionsänderung der Hand oder einzelner Finger. Insbesondere kann dabei die Stellung einzelner Finger relativ zueinander und zur Hand berücksichtigt werden. Auf diese Weise kann vorteilhafterweise zum Beispiel ein Zoom, eine Verschiebung, eine Markierung und/oder eine Auswahl mittels einer Geste implementiert werden. Ferner können mehrere nacheinander ausgeführte Gesten mittels einer Bilderfolge erkannt werden.

Ferner kann eine Geste erkannt werden, die mittels einer Hand so ausgeführt wird, dass die erfassten Bilddaten im Wesentlichen ein Abbild der Handfläche oder des Handrückens umfassen, gegebenenfalls mit Fingern der Hand. Zudem kann vorgesehen sein, dass eine seitliche Ansicht der Hand erkannt wird, beispielsweise nach einer Drehung der Hand so, dass eine Handkante auf den Sensor gerichtet ist. Beispielsweise kann eine solche Lage der Hand anhand eines länglichen Objekts erkannt werden. Ferner kann eine Veränderung der Lage der Hand erkannt werden, indem Veränderung der Eigenschaften des erkannten Objekts, etwa einer Exzentrizität, einer Rundheit, einer Amplitude oder von Wiederholungen innerhalb eines Abstandsprofil identifiziert werden.

Bei dem Verfahren wird anhand der bestimmten Geste ein Ausgabesignal erzeugt und ausgegeben. Das Ausgabesignal kann insbesondere Steuerungsdaten für eine Einrichtung umfassen, an welche das Ausgabesignal bei der Ausgabe übertragen wird. Die Ausgabe muss dabei nicht notwendigerweise so erfolgen, dass eine durch einen Menschen erfassbare Information ausgegeben wird, sondern sie kann lediglich an eine Einrichtung erfolgen. Alternativ oder zusätzlich kann jedoch eine menschlich wahrnehmbare Ausgabe erfolgen, beispielsweise in dem in Abhängigkeit von dem Ausgabesignal eine visuell, optisch und/oder akustisch wahrnehmbare Ausgabe erzeugt und ausgegeben wird, wobei die Ausgabe mittels einer Ausgabeeinheit erfolgt.

Die erfindungsgemäße Vorrichtung zum Erfassen einer Nutzereingabe anhand einer Geste umfasst eine Erfassungseinheit, durch die Bilddaten erfassbar sind, und eine Segmentierungseinheit, durch die anhand der erfassten Bilddaten eine Segmentierung durchführbar ist, wobei ein Objekt mit einer Umrisslinie bestimmbar ist. Die Vorrichtung umfasst ferner eine Profilberechnungseinheit, durch die anhand des Objekts ein Referenzpunkt bestimmbar ist, wobei für eine Vielzahl von Punkten auf der Umrisslinie des Objekts jeweils ein Abstand zu dem Referenzpunkt bestimmbar ist und anhand der Abstände ein gemessenes Abstandsprofil erzeugbar ist. Sie umfasst zudem eine Zuordnungseinheit, durch die anhand des gemessenen Abstandsprofils eine Geste bestimmbar ist, sowie eine Ausgabeeinheit, durch die anhand der bestimmten Geste ein Ausgabesignal erzeugbar und ausgebbar ist.

Die erfindungsgemäße Vorrichtung ist insbesondere ausgebildet, das vorstehend beschriebene erfindungsgemäße Verfahren zu implementieren. Die Vorrichtung weist somit dieselben Vorteile auf wie das erfindungsgemäße Verfahren.

Die Ausgabeeinheit umfasst insbesondere eine Schnittstelle mittels derer das Ausgabesignal an eine andere Einrichtung übertragbar ist, wobei nicht zwangsläufig eine für den menschlichen Nutzer wahrnehmbare Ausgabe erzeugt wird. Die Ausgabe kann beispielsweise auf an sich bekannte Weise an eine weitere Einrichtung übertragen werden, sodass für diese Einrichtung eine Gestensteuerung implementiert wird.

Die Vorrichtung ist insbesondere in einem Fahrzeug angeordnet und/oder von dem Fahrzeug umfasst.

Die Erfindung wird nun anhand von Ausführungsbeispielen mit Bezug zu den Zeichnungen erläutert.

Figur 1          zeigt ein Fahrzeug mit einem Ausführungsbeispiel der erfindungsgemäßen Vorrichtung,
Figur 2          zeigt ein Ausführungsbeispiel des erfindungsgemäßen Verfahrens und
Figuren 3A bis 8B  zeigen Ausführungsbeispiele von Objekten und dazugehörigen Abstandsprofilen, wie sie bei dem erfindungsgemäßen Verfahren auftreten können.

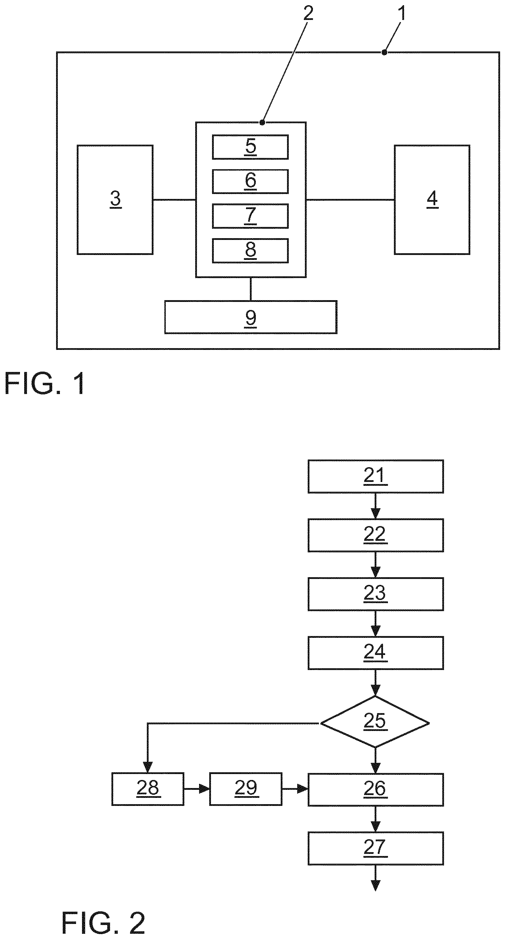

Mit Bezug zu Figur 1 wird ein Fahrzeug mit einem Ausführungsbeispiel der erfindungsgemäßen Vorrichtung erläutert.

Ein Fahrzeug 1 umfasst eine Erfassungseinheit 4, die mit einer Steuereinheit 2 gekoppelt ist. Es umfasst ferner eine Einrichtung 3, im dargestellten Ausführungsbeispiel ein Radio 3, sowie eine Speichereinheit 9, die beide ebenfalls mit der Steuereinheit 2 gekoppelt sind. Dabei umfasst die Steuereinheit 2 eine Segmentierungseinheit 5, eine Profilberechnungseinheit 6, eine Zuordnungseinheit 7 und eine Ausgabeeinheit 8.

Die Erfassungseinheit 4 umfasst bei dem Ausführungsbeispiel eine *Time-of-Flight-Kamera* 4, die auf an sich bekannte Weise ausgebildet ist. Insbesondere werden Lichtimpulse im Infrarotbereich ausgesendet und an Objekten reflektiert. Solches von Objekten in einem Erfassungsbereich reflektiertes Licht wird detektiert und für eine Matrix von Bildpunkten der *Time-of-Flight-Kamera* 4 wird bestimmt, welcher zeitliche Versatz zwischen dem Aussenden des Lichtimpulses und der Detektion des reflektierten Lichts auftritt. Anhand des zeitlichen Versatzes und der Lichtgeschwindigkeit wird der Laufweg des Lichts und der Abstand des reflektierenden Objekts berechnet. Anhand der bei der Detektion erzeugten Daten können Bilddaten erzeugt werden, wobei jedem Bildpunkt eine Distanzinformation zugeordnet ist, beispielsweise ein Wert für den Abstand eines reflektierenden Objekts. Ferner können Daten über eine detektierte Intensität, eine Streuung oder andere Parameter erfasst werden.

In weiteren Ausführungsbeispielen kann die Erfassungseinheit 4 alternativ oder zusätzlich andere Sensoren oder Detektortypen umfassen, beispielsweise eine Stereokamera, ein Ultraschallsystem, ein Laserscanner oder eine andere Einheit mit ähnlicher Funktionsweise, die insbesondere die Bestimmung von Distanzinformationen für die Bilddaten ermöglichen. Ferner kann eine Erfassungseinheit 4 vorgesehen sein, bei welcher die Bilddaten ohne Distanzinformationen bestimmt werden, beispielsweise anhand einer einfachen Kamera.

Bei dem Ausführungsbeispiel ist ferner vorgesehen, dass durch die Erfassungseinheit 4 eine Folge von Einzelbildern erfasst wird. Die erfassten Bilddaten umfassen dabei Videodaten. In einem anderen Ausführungsbeispiel kann jedoch auch vorgesehen sein, dass lediglich Einzelbilder erfasst werden.

Mit Bezug zu Figur 2 wird ein Ausführungsbeispiel des erfindungsgemäßen Verfahrens erläutert. Dabei wird von dem oben mit Bezug zu Figur 1 erläuterten Ausführungsbeispiel der erfindungsgemäßen Vorrichtung ausgegangen.

In einem ersten Schritt 21 werden durch die Erfassungseinheit 4 Bilddaten erfasst. Die Bilddaten umfassen bei dem Ausführungsbeispiel Bildpunkte von Einzelbildern, die jeweils einem Zeitpunkt zugeordnet sind. Insbesondere wird eine Folge zeitlich geordneter Einzelbilder erfasst, in anderen Ausführungsbeispielen können einzelne Einzelbilder erfasst werden.

Die Bilddaten werden an die Steuereinheit 2 übertragen und dort weiterverarbeitet. In einem zweiten Schritt 22 erfolgt die Signalaufbereitung nach an sich bekannter Weise, wobei etwa Einzelbilder innerhalb der Bilddaten erkannt werden können, etwa für den Fall einer Videosequenz. Ferner können neben den eigentlichen Bilddaten auch Metadaten eingelesen werden, etwa Bildinformationen über einem Einzelbild zugeordnete Zeitdaten oder weitere Informationen. Ferner kann eine Filterung und/oder eine Kalibration durchgeführt werden.

In einem weiteren Schritt 23 wird durch die Segmentierungseinheit 5 der Vorrichtung eine Segmentierung durchgeführt. Diese erfolgt auf an sich bekannte Weise und es wird anhand der Bilddaten ein Objekt mit einer Umrisslinie bestimmt. Das Objekt wird insbesondere anhand inhaltlich zusammengehöriger, zusammenhängender Bildpunkte bestimmt. Bei der Segmentierung werden nicht zu detektierende Objekte beziehungsweise Bildpunkte identifiziert und entfernt, wobei ein mehrstufiges Verfahren verwendet werden kann.

Bei dem Ausführungsbeispiel ist vorgesehen, dass eine mittels einer Hand durchgeführte Geste erkannt wird. Bei der Segmentierung im Schritt 23 werden zunächst das an die Hand anschließende Handgelenk und der Arm identifiziert und aus dem Bild entfernt, da diese Bereiche nicht zur Gestenerkennung herangezogen werden soll. Ferner kann vorgesehen sein, dass ein Neigungswinkel der Hand bestimmt und ausgeglichen wird, wobei beispielsweise die Positionen des ausgefilterten Handgelenks verwendet werden kann. Bei dem Segmentierungsschritt 23 wird ein Objekt innerhalb zumindest eines Einzelbildes bestimmt und es wird eine Umrisslinie bestimmt, die beispielsweise definiert ist als Verlauf des äußersten Randes des Objekts oder als eine Linie durch die Mittelpunkte der am Rand des Objekts angeordneten Bildpunkte.

In weiteren Ausführungsbeispielen kann alternativ oder zusätzlich eine anhand eines anderen Eingabeobjekts durchgeführte Geste erfasst und erkannt werden. Der Segmentierungsschritt 23 wird auf eine entsprechend angepasste Weise durchgeführt.

Bei weiteren Ausführungsbeispielen können bei der Signalaufbereitung 22 und/oder der Segmentierung 23 weitere an sich bekannte Verfahren zur Bildverarbeitung eingesetzt werden, etwa zur Erkennung eines bestimmten Eingabeobjekts, insbesondere einer Hand, und zur Unterscheidung von nicht zu erkennenden Objekten, etwa im Hintergrund eines Einzelbildes.

In einem weiteren Schritt 24 wird eine Extraktion von Merkmalen anhand des bei der Segmentierung bestimmten Objekts durchgeführt. Dazu wird bei dem Ausführungsbeispiel ein Flächenkreis bestimmt, wobei zunächst der geometrische Schwerpunkt der Fläche des erkannten Objekts als Mittelpunkt des Flächenkreises bestimmt wird. Um den Flächenkreis zu parametrisieren wird ferner ein Radius so bestimmt, dass die Fläche des Flächenkreises gleich der Fläche des bestimmten Objekts ist.

In einem weiteren Schritt wird durch die Profilberechnungseinheit 6 ein Abstandsprofil bestimmt, wobei die Umrisslinie des Objekts mittels Polarkoordinaten mit Ursprung im Mittelpunkt des Flächenkreises parametrisiert wird. Dazu kann beispielsweise ein Zeiger definiert werden, der seinen Ursprung im Mittelpunkt des Flächenkreises hat und bis zur Umrisslinie des Objekts reicht. Das Abstandsprofil gibt die Länge dieses Zeigers in Abhängigkeit von einem Winkel an, welchen der Zeiger mit einer senkrecht nach oben weisenden, durch den Mittelpunkt verlaufende Linie einschließt. Zum Beispiel wird das Abstandsprofil dabei so erzeugt, dass die Länge des Zeigers über eine vollständige Drehung im Uhrzeigersinn ausgehend von einer senkrecht nach oben weisenden Position aufgetragen wird. Der Winkel des Zeigers kann dabei beispielsweise im Bogenmaß angegeben und durch den Normierungsfaktor $\frac{1}{2\pi}$ auf 1 normiert werden. Ferner kann eine Normierung des Abstandsprofils anhand des Radius r des Flächenkreises, das heißt mittels des Normierungsfaktors $\frac{1}{r}$ erfolgen, sodass die Werte des Abstandsprofil um einen normierten Wert von 1 schwanken.

In weiteren Ausführungsbeispielen kann das Abstandsprofil für äquidistant entlang der Umrisslinie angeordnete Punkte bestimmt werden.

Optional kann eine Vorverarbeitung des Abstandsprofils durchgeführt werden, beispielsweise mittels einer Glättung, um Rauschen zu unterdrücken.

Es werden Merkmale des Abstandsprofils extrahiert, wobei insbesondere Berechnungen nach Art einer Kurvendiskussion durchgeführt werden. Insbesondere wird eine erste und eine zweite Ableitung des Abstandsprofil bestimmt. Bei dem Ausführungsbeispiel ist vorgesehen, dass formbasierte Merkmale extrahiert werden, insbesondere Positionen, Abstände und/oder Amplituden von Extrema des Abstandsprofil sowie die Positionen von Wendepunkten.

Beispielsweise kann bei einer Geste, die mittels einer zumindest teilweise geöffneten und dem Sensor der Erfassungseinheit 4 zugewandten Hand durchgeführt wird, eine Anzahl gestreckter Finger anhand der Anzahl der extrahierten Maxima des Abstandsprofils ermittelt werden. Dabei können weitere Verfahren verwendet werden, beispielsweise um Fehldetektionen zu vermeiden, indem Schwellenwerte für eine minimale oder maximale Amplitude eines Extremwerts oder für eine bestimmte Breite des Kurvenverlaufs in einer Umgebung des Extremums berücksichtigt werden.

In weiteren Ausführungsbeispielen können alternativ oder zusätzlich weitere Merkmale extrahiert werden.

In einem weiteren Schritt 25 wird bei dem Ausführungsbeispiel unterschieden, ob eine Erkennung einer Geste durchgeführt werden soll oder ob das System trainiert werden soll, etwa um eine Geste neu zu lernen oder die Erkennung einer bekannten Geste zu verbessern.

Wenn eine Geste erkannt werden soll, wird in einem Schritt 26 durch die Zuordnungseinheit 7 eine Klassifizierung durchgeführt. Dies kann als Ablauf des Verfahrens in einem "*online*-Modus" bezeichnet werden, bei dem eine Geste erkannt und ein entsprechendes Ausgabesignal erzeugt und ausgegeben werden soll. Dabei wird bei dem Ausführungsbeispiel anhand des zuvor bestimmten Abstandsprofils und/oder der extrahierten Profilmerkmale eine zugeordnete Geste bestimmt. Dabei können bestimmte Merkmalen bestimmten Gesten zugeordnet sein, beispielsweise eine bestimmte Anzahl von Maxima des Abstandsprofils. In diesem Fall kann unterschieden werden, ob ein oder mehrere Finger gestreckt sind und allein die Anzahl der gestreckten Finger kann die Zuordnung einer Geste erlauben.

Die Klassifizierung kann gegebenenfalls mehrstufig erfolgen, beispielsweise indem zunächst eine Klassifizierung anhand bestimmter Merkmale durchgeführt und anschließend anhand weiterer Merkmale verfeinert wird.

Ferner kann ein Profilvergleich durchgeführt werden, wobei Referenzprofile verwendet werden, die bei dem Ausführungsbeispiel von der Speichereinheit 9 bereitgestellt werden. Der Profilvergleich kann auf unterschiedliche Weisen erfolgen.

Beispielsweise kann für die Referenzprofile eine Vorverarbeitung durchgeführt werden, insbesondere analog zu der Extraktion von Merkmalen des Abstandsprofil im Schritt 24. Das Ergebnis einer solchen Vorverarbeitung für die Referenzprofile kann bereits vor Ausführung des Verfahrens erfolgen und die resultierenden Profilmerkmale können gespeichert und bereitgestellt werden. Der Profilvergleich kann dann vergleichsweise einfach durchgeführt werden, indem etwa die Anzahl der Extrema, ihre Form und Lage, gegebenenfalls zueinander, und/oder der Kurvenverlauf zwischen den Extrema, etwa anhand der Parameter der Wendepunkte, berücksichtigt werden.

Zur Erkennung des Objekts und insbesondere zur Zuordnung der Geste zu dem Objekt werden zur Laufzeit eines Programms zur Ausführung des Verfahrens beispielsweise für ein in einem Einzelbild erkanntes Objekt Repräsentationen für bestimmte Gesten durchlaufen und mit dem bestimmten Abstandsprofil verglichen. Die Repräsentationen sind insbesondere in einem Mikrocontroller gespeichert und können auf diese Weise besonders schnell zur Laufzeit durchlaufen und ausgewertet werden. Die Repräsentationen können Merkmale aus einem Trainingslauf umfassen, bei dem ein Training für die erkennbaren Gesten durchgeführt wird. Wird bei einem solchen Durchlaufen eine Geste erkannt, kann dieses Ergebnis an ein übergeordnetes System gemeldet beziehungsweise ein Ausgabesignal erzeugt und ausgegeben werden.

In einer aufwändigeren Ausführung kann der Profilvergleich anhand eines Maschinenlernverfahrens durchgeführt werden, insbesondere mittels eines neuronalen Netzes. Dies erfordert typischerweise eine höhere Rechenleistung, kann jedoch insbesondere zur Erkennung von Gesten anhand komplexerer Abstandsprofile genutzt werden. Zum Profilvergleich wird hier beispielsweise das gesamte Abstandsprofil sowie gegebenenfalls entsprechende Daten von Referenzprofilen verwendet. Insbesondere werden hier für den Profilvergleich nicht nur einzelne extrahierte Profilmerkmale berücksichtigt.

In weiteren Ausführungsbeispielen kann der Profilvergleich auf andere Weise erfolgen, wobei dem Abstandsprofil ein Referenzprofil oder eine Gruppe von Referenzprofilen zugeordnet wird. Die Referenzprofile sind insbesondere jeweils einer Geste zugeordnet.

Nachdem anhand der erfassten Bilddaten eine Geste bestimmt wurde, wird in einem weiteren Schritt 27 eine Nachbearbeitung durchgeführt, wobei durch die Ausgabeeinheit 8 ein Ausgabesignal erzeugt und ausgegeben wird. Bei dem Ausführungsbeispiel ist vorgesehen, dass das Ausgabesignal ein Steuersignal für die Einrichtung 3, in diesem Fall das Radio 3, umfasst und an dieses übertragen wird, wobei keine für einen menschlichen Nutzer erfassbare Ausgabe erfolgt. Die Gestensteuerung des Radius 3 erfolgt auf an sich bekannte Weise, wobei beispielsweise ein Radiosender eingestellt werden kann, wenn eine Geste mit einer bestimmten Anzahl von Fingern erkannt wird. In weiteren Ausführungsbeispielen kann die Ausgabe für den Nutzer erfassbar ausgegeben werden, etwa mittels einer visuell wahrnehmbaren Anzeige.

In weiteren Ausführungsbeispielen können andere Einrichtungen 3 mittels einer Gestensteuerung gesteuert werden, wobei anhand der Geste eine Eingabe erfasst wird.

Wird in dem Entscheidungsschritt 25 erkannt, dass ein Training der Gestenerkennung durchgeführt werden soll, wird in einem Schritt 28 ein Modelltraining durchgeführt und in einem weiteren Schritt 29 ein Modell generiert. Dies kann durch die Speichereinheit 9 nichtflüchtig gespeichert und kann für spätere Durchläufe bereitgestellt werden. Der Ablauf des Trainings kann als "*offline*-Modus", das heißt ohne das Erzeugen eines Ausgabesignals, durchgeführt werden. Das dabei neu generierte Modell ist gegenüber einem älteren Modell verändert, etwa um eine bekannte Geste besser zu erkennen, oder es kann ein neues Modell erzeugt werden, etwa für eine neu zu lernende Geste. Ein Modell kann insbesondere Referenzprofile oder vergleichbare Daten umfassen, welche zur Erkennung einer Geste anhand eines Abstandsprofil verwendet werden können. Optional kann anschließend eine Klassifizierung zur Erkennung eine Geste sowie eine Erzeugung und Ausgabe eines Ausgabesignals erfolgen.

In einem weiteren Ausführungsbeispiel kann dabei ein Klassifikator eines neuronalen Netzes trainiert oder ein anderes Maschinenlernverfahren durchgeführt werden.

Die oben erläuterten Verfahren im *online-* beziehungsweise *offline*-Modus können je nach dem bekannten Objekt und Anwendungsfall einzeln oder nacheinander ausgeführt werden, wobei insbesondere zu berücksichtigen ist, dass die Erkennungssicherheit für eine Geste typischerweise durch vermehrtes Training verbessert werden kann.

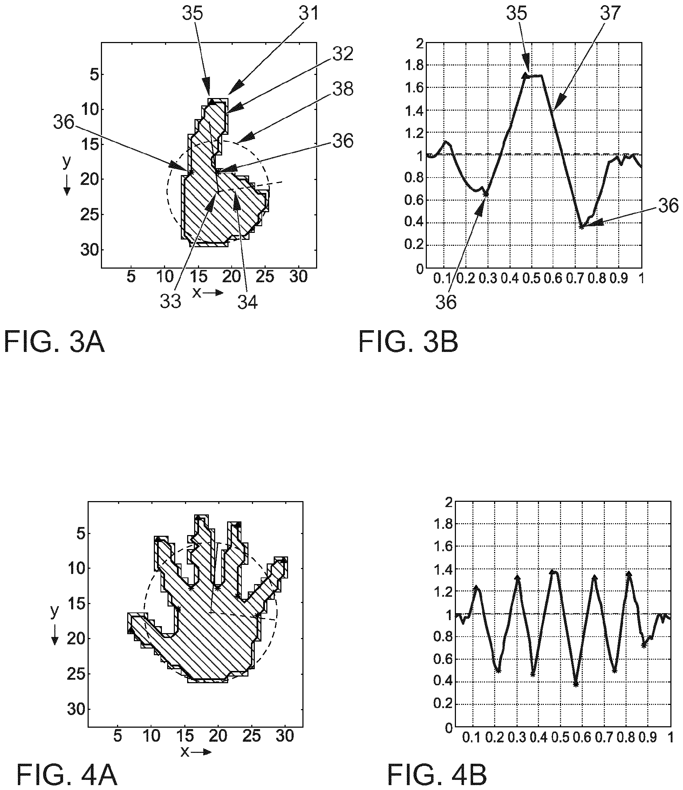

Mit Bezug zu den Figuren 3A bis 8B werden Ausführungsbeispiele von Objekten und dazugehörigen Abstandsprofilen erläutert, wie sie bei dem erfindungsgemäßen Verfahren auftreten können. Dabei wird insbesondere von dem oben mit Bezug zu Figur 1 beschriebenen Ausführungsbeispiel der erfindungsgemäßen Vorrichtung sowie von dem oben mit Bezug zu Figur 2 beschriebenen Ausführungsbeispiel des erfindungsgemäßen Verfahrens ausgegangen.

Das jeweils in den Figuren 3A, 4A, 5A, 6A, 7A und 8A gezeigte Bild entspricht einer durch die Erfassungseinheit 4 erfassten Abbildung eines Eingabeobjekts nach einem Segmentierungsschritt, in dem man Objekt 31 identifiziert wurde. Für jeden Bildpunkt kann etwa eine von dem Eingabeobjekt reflektierte Intensität und/oder ein Abstandswert erfasst werden. Die Graphen in den Figuren 3B, 4B, 5B, 6B, 7B und 8B zeigen jeweils zumindest teilweise das jeweilige Abstandsprofil 37, welches bei dem Beispiel in einem Trainingslauf, das heißt in einem offline-Modus des erfindungsgemäßen Verfahrens, gewonnen wurde. Die anhand der in den Bilddaten erkannten Objekte 31 erfassten Merkmale können vollständig, beispielsweise als Bilddaten, oder in einer komprimierten Form gespeichert werden, etwa indem die Profilmerkmale extrahiert und gespeichert werden.

Bei dem in Figur 3A gezeigten Beispiel wurde ein Objekt 31 innerhalb eines Einzelbildes der Bilddaten erkannt, das beispielsweise eine Hand mit einem gestreckten Finger entspricht. Für das Objekt 31 wurde eine Umrisslinie 32 erzeugt, die einer geschlossenen Linie durch die jeweiligen Mittelpunkte der Pixel des Objekts 31 entspricht. Es wurde ferner ein Flächenkreis 38 bestimmt, dessen Mittelpunkt 33 mit dem Schwerpunkt des Objekts 31 zusammenfällt und dessen Radius 34 so gewählt wurde, dass die Fläche des Flächenkreises 38 mit der Fläche des Objekts 31 übereinstimmt.

Die Umrisslinie 32 des Objekts 31 wird zur Erzeugung eines Abstandsprofil 37 parametrisiert. Dazu wird für Punkte entlang der Umrisslinie 32 ein Abstand zum Mittelpunkt 33 des Flächenkreises 38 bestimmt und anhand des Radius 34 des Flächenkreises 38 normiert. Das heißt, die Schnittpunkte des Umrisses 32 mit dem Flächenkreises 38 haben jemals einen Abstand von 1. Das Abstandsprofil 37 gibt den normierten Abstand der Punkte auf der Umrisslinie 32 in Abhängigkeit von ihrer Position auf der Umrisslinie 32 an, wobei die Position als Abstand entlang der Umrisslinie 32 berechnet wird, beginnend bei einem beliebigen Punkt auf der Umrisslinie 32.

In weiteren Ausführungsbeispielen kann das Abstandsprofil 37 den normierten Abstand in Abhängigkeit von einem Winkel angeben, welchen die Verbindungslinie zwischen dem Mittelpunkt 33 und dem Punkt auf der Umrisslinie 32 beispielsweise mit einer senkrechten Linie einschließt.

Das Abstandsprofil 37 des in Figur 3A gezeigten Objekts 31 ist in Figur 3B gezeigt. Entlang der X-Achse ist ein Ausschnitt des Abstandes entlang der Umrisslinie 32 gezeigt, normiert auf Werte zwischen 0 und 1. Der zu betrachtende Ausschnitt kann dabei auf an sich bekannte Weise bestimmt werden. Der Ausschnitt umfasst die in Figur 3A gezeigten Extrema, nämlich 2 Minima 36 (gezeigt als Sternchen) und ein Maximum 35 (gezeigt als Dreieck). Die Bestimmung der Extrema 35, 36 erfolgt auf an sich bekannte Weise, insbesondere mittels der ersten und zweiten Ableitung des Abstandsprofils 37 sowie gegebenenfalls einer Glättung. Ferner können Schwellenwerte berücksichtigt werden, beispielsweise indem ein Maximum 35 erst beim Überschreiten eines unteren Schwellenwerts und ein Minimum 36 erst bei Unterschreiten eines oberen Schwellenwerts erkannt wird.

Bei dem in den Figuren 3A und 3B gezeigten Beispiel kann etwa anhand des Abstandsprofils 37 ein Maximum 35 identifiziert werden, welches einem gestreckten Finger entspricht. Das heißt, eine solche Geste kann anhand des Abstandsprofils 37 bereits erkannt werden.

Bei weiteren Ausführungsbeispielen ist vorgesehen, dass das Abstandsprofil 37 mit einem oder mehreren Referenzprofilen verglichen wird. Bei diesem Profilvergleich können die Kurvenverläufe verglichen werden und/oder es können Profilmerkmale extrahiert und verglichen werden, um beispielsweise zu überprüfen, ob das gemessene Abstandsprofil 37 die gleiche Anzahl Maxima 35 aufweist wie ein Referenzprofil. Bei weiteren Ausführungsbeispielen kann zur Durchführung des Profilvergleichs ein neuronales Netz oder ein anderes Verfahren verwendet werden.

Anhand der bei diesem Beispiel in einem offline-Modus erfassten Daten kann ein Modell generiert werden, beispielsweise um eine neue Geste zu lernen, indem die extrahierten Merkmale 35, 36 in einem Modell gespeichert hinterlegt werden und später als Referenzprofil abrufbar sind. Ferner kann ein Modell, das heißt insbesondere ein oder mehrere Referenzprofile, die der hier erkannten Geste zugeordnet sind, aktualisiert und gespeichert werden.

Bei dem in den Figuren 4A und 4B gezeigten Beispiel wurden Bilddaten einer geöffneten Hand mit fünf Fingern erfasst. Auf die oben beschriebene Weise wurde ein Abstandsprofil 37 bestimmt, das in Figur 4B gezeigt ist. Anhand des Abstandsprofils 37 können fünf Maxima 35 (gezeigt als Dreieck) identifiziert werden, was bei dem Beispiel der Anzahl der gestreckten Finger entspricht.

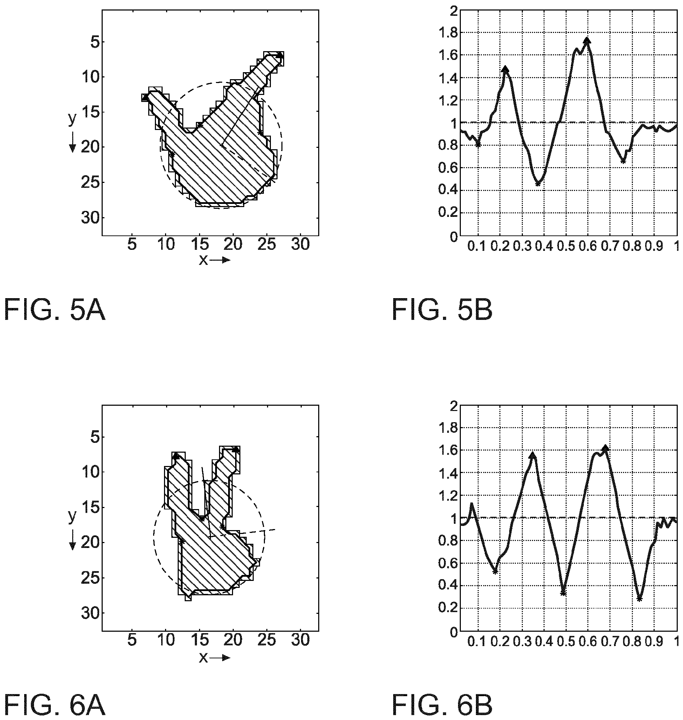

Bei dem in den Figuren 5A und 5B gezeigten Beispiel wurden Bilddaten einer Hand mit zwei gestreckten Fingern, etwa Daumen und Zeigefinger, erfasst. Auf die oben beschriebene Weise wurde ein Abstandsprofil bestimmt, das in Figur 5B gezeigt ist und in dem zwei Maxima 35 (gezeigt als Dreieck) identifiziert werden. Dies entspricht bei dem Beispiel der Anzahl der gestreckten Finger. Ferner kann der Kurvenverlauf analysiert und zum Beispiel der Abstand der den gestreckten Fingern zugeordneten Maxima 35 ausgewertet werden. Die erkannte Geste kann beispielsweise als Zoom-Geste interpretiert werden.

Bei dem in den Figuren 6A und 6B gezeigten Beispiel wurden - ähnlich wie bei dem in den Figuren 5A und 5B gezeigten Beispiel - Bilddaten einer Hand mit zwei gestreckten Fingern, etwa Zeige- und Mittelfinger, erfasst. Auf die oben beschriebene Weise wurde ein Abstandsprofil bestimmt, das in Figur 6B gezeigt ist und in dem zwei Maxima 35 (gezeigt als Dreieck) identifiziert werden. Dies entspricht bei dem Beispiel der Anzahl der gestreckten Finger. Zur Unterscheidung dieser Geste von der oben mit Bezug zu den Figuren 5A und 5B gezeigten Geste können beispielsweise die erste und die zweite Ableitung der Abstandsprofile berücksichtigt werden. Das heißt, der Verlauf des Anstiegs und die Amplitudenhöhe gehen in ein der jeweiligen Geste zugeordnetes Modell ein. Beispielsweise kann in dem gezeigten Fall festgestellt werden, wie weit die beiden Maxima 35 voneinander entfernt sind und/oder wie steil das Abstandsprofil 37 zwischen den Maxima 35 verläuft.

Bei weiteren Ausführungsbeispielen kann zur Erkennung einer Geste anhand des Abstandsprofils 37 ein neuronales Netz oder ein vergleichbares Verfahren verwendet werden. Eine solche Erkennung ist typischerweise wesentlich aufwendiger als die beschriebene Erkennung mittels einzelner Profilparameter, die einfach anhand von Mitteln der Kurvendiskussion bestimmt werden können.

Bei den oben genannten Beispielen wurden Hände als Eingabeobjekte betrachtet. In weiteren Ausführungsbeispielen können noch andere Gegenstände und Eingabeobjekte, etwa ein Fuß, Kopf oder ein Alltagsgegenstand zur Erfassung von Gesten verwendet werden. Hierzu können Modelle, insbesondere mit Referenzprofilen, erzeugt und gespeichert werden. Insbesondere wenn bei verschiedenen Gesten die gleiche Anzahl von Extrema 35, 36 beziehungsweise Wendepunkten der jeweiligen Abstandsprofile auftreten, können die Ableitungen der Abstandsprofile 37 und ihre jeweiligen Merkmale zur Erkennung einer Geste verwendet werden. Bei dem Verfahren gemäß der Erfindung werden dabei im Verhältnis zu anderen Techniken sehr kleine Speichergrößen verwendet, beispielsweise unter 50 Byte pro Objekt, und es kann eine besonders schnelle Verarbeitung gewährleistet werden, beispielsweise mittels eines Mikrocontroller mit geringer Rechenleistung unter 1 Mips *(million instructions per second)*.

Anhand der Abstandsprofile 37 können alternativ oder zusätzlich verschiedene weitere Profilmerkmale extrahiert werden, beispielsweise eine Exzentrizität, eine Rundheit, ein Ausschlag einer Amplitude, eine Neigung im Raum und/oder Wiederholungen der Kurve, beispielsweise die Erkennung einer Periodizität.

Bei den beschriebenen Ausführungsbeispielen des erfindungsgemäßen Verfahrens wird ferner durch die Normierung anhand des Radius 34 des Flächenkreises 38 sichergestellt, dass Gesten mit einer Eingabeobjekten verschiedener Größe, beispielsweise verschiedenen Händen, erkannt werden können.

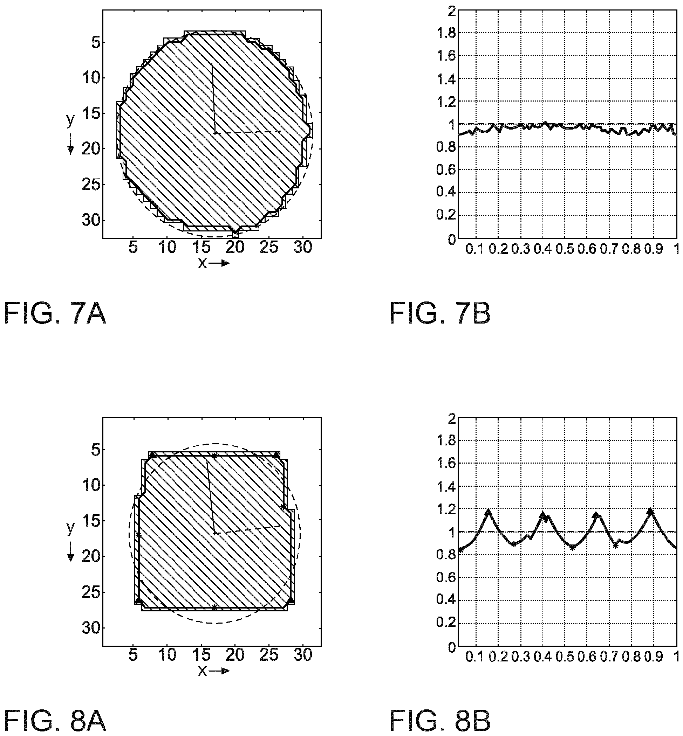

Bei dem in den Figuren 7A und 7B gezeigten Beispiel wurden Bilddaten einer runden Fläche, etwa einer Kugel oder eines kreisrunden Schildes, erfasst. Auf die oben beschriebene Weise wurde ein Abstandsprofil 37 bestimmt, das in Figur 7B gezeigt ist und einen im Wesentlichen zum Umriss 32 des Flächenkreises 38 parallelen Verlauf zeigt. Insbesondere werden keine Extrema 35, 36 der Kurve detektiert. Anhand einer solchen Linie kann also ein kreisrundes Eingabeobjekt identifiziert werden.

Bei dem in den Figuren 8A und 8B gezeigten Beispiel wurden Bilddaten eines Quaders erfasst. Auf die oben beschriebene Weise wurde ein Abstandsprofil 37 bestimmt, das in Figur 8B gezeigt ist und in regelmäßigen Abständen vier Maxima 35 aufweist, zwischen denen in ebenso regelmäßigen Abständen vier Minima 36 angeordnet sind. Ferner kann etwa anhand der erfassten und gegebenenfalls der zweiten Ableitung bestimmt werden, dass sich der Verlauf des Abstandsprofil zwischen den Maxima 35 im Wesentlichen periodisch wiederholt. Eine solche Linie kann also einem quadratischen Eingabeobjekt zugeordnet werden.

Merkmale wie in den oben mit Bezug zu den Figuren 7A bis 8B erläuterten Fällen können beispielsweise herangezogen werden, um verschiedene Eingabeobjekte zu unterscheiden, etwa eine Hand, einen Fuß und einen Kopf.

Bei weiteren Ausführungsbeispielen werden ferner Bilddaten mittels einer Kamera so erfasst, dass anhand anderer Bildverarbeitungsverfahren, etwa anhand neuronaler Netze, verschiedene Eingabeobjekte erkannt werden können, wobei insbesondere an sich bekannte Bildverarbeitungsverfahren genutzt werden. Dadurch kann beispielsweise ein bestimmtes Eingabeobjekt, etwa eine Hand, erfasst und lokalisiert werden, um die Segmentierung der Bilddaten zu erleichtern und/oder um einen Erfassungsraum zu definieren, in dem das Eingabeobjekt lokalisiert wurde. Die Erkennung einer Geste mittels des erfindungsgemäßen Verfahrens kann dann auf einen bestimmten Bereich der Bilddaten beschränkt und schneller durchgeführt werden.

In weiteren Ausführungsformen können Merkmale berücksichtigt werden, die durch andere Umrisslinien als die äußerste Umrisslinie 32 des bei der Segmentierung erkannten Objekts 31 gebildet werden. Beispielsweise kann das bei der Segmentierung erkannte Objekt 31 ein "Loch" aufweisen, das heißt einen von der Fläche des Objekts 31 umschlossenen Bereich, der selbst nicht zu dem Objekt 31 gehört. Ein solcher Bereich kann beispielsweise bei einer Handgeste wie dem unter Tauchern verbreiteten "OK"-Signal gebildet werden. Ein solcher umschlossener Bereich kann als weiteres Merkmal zur Erkennung eine Geste herangezogen werden. Ferner kann vorgesehen sein, dass eine Parametrisierung des umschlossenen Bereichs erfolgt und dabei ermittelte Parameter ebenso bei der Erkennung der Geste berücksichtigt werden.

Bei einem weiteren Ausführungsbeispiel umfassen die Bilddaten eine zeitlich geordnete Folge von Einzelbildern. Dabei kann eine Auswertung der einzelnen Bilder jeweils für sich erfolgen oder es kann eine Veränderung einer Geste über den Verlauf einer Zeit bestimmt werden. Alternativ oder zusätzlich kann die Dauer der Erfassung einer Geste erfasst werden. Die Verarbeitung der Bilddaten erfolgt in diesen Fällen im Wesentlichen wie oben beschrieben, wobei die Bilddaten der jeweiligen Einzelbilder separat analysiert werden können. Alternativ oder zusätzlich können Gesten durch einen Ablauf von Veränderungen der gemessenen Abstandsprofile 37 charakterisiert sein, beispielsweise eine Zoom-Geste, bei welcher der Abstand zweier gestreckter Finger zueinander verändert wird, was anhand wechselnder Abstände der Maxima 35 in den Abstandsprofilen 37 detektiert werden kann. Weitere Gesten können alternativ oder zusätzlich auf an sich bekannte Weise vorgesehen sein und erkannt werden.

Bezugszeichenliste

1 Fahrzeug
2 Steuereinheit
3 Einrichtung; Radio
4 Erfassungseinheit; *Time-of-Flight-* (ToF-)Kamera
5 Segmentierungseinheit
6 Profilberechnungseinheit
7 Zuordnungseinheit
8 Ausgabeeinheit
9 Speichereinheit
21 Erfassung von Bilddaten
22 Signalaufbereitung
23 Segmentierung
24 Extraktion von Merkmalen
25 Entscheidung zwischen Trainieren oder Erkennen
26 Klassifizierung
27 Nachbearbeitung
28 Modelltraining
29 Generierung eines Modells
31 Objekt
32 Umrisslinie
33 Referenzpunkt; Mittelpunkt
34 Radius
35 Profilmerkmal; Extremwert; Maximum
36 Profilmerkmal; Extremwert; Minimum
37 Abstandsprofil
38 Flächenkreis

**Patentansprüche**

1.  Verfahren zum Erfassen einer Nutzereingabe anhand einer Geste, bei dem

    Bilddaten erfasst werden, wobei die erfassten Bilddaten Bildpunkte umfassen und den Bildpunkten Distanzinformationen, welche zumindest mit einer Time-Of-Flight Kamera, einem Ultraschallsystem, einem Laserscanner oder einer Stereokamera erfasst werden, zugeordnet sind und die erfassten Bilddaten anhand der Distanzinformationen gefiltert werden;
    anhand der gefilterten Bilddaten eine Segmentierung durchgeführt wird, wobei ein Objekt (31) mit einer Umrisslinie (32) bestimmt wird;
    anhand des Objekts (31) ein Referenzpunkt (33) bestimmt wird;
    für eine Vielzahl von Punkten auf der Umrisslinie (32) des Objekts (31) jeweils ein Abstand zu dem Referenzpunkt (33) bestimmt wird und anhand der Abstände ein gemessenes Abstandsprofil (37) erzeugt wird, wobei der Referenzpunkt (33) der geometrische Schwerpunkt des Objekts (31) ist;

anhand des gemessenen Abstandsprofils (37) eine Geste bestimmt wird; und

anhand der bestimmten Geste ein Ausgabesignal erzeugt und ausgegeben wird.

2. Verfahren gemäß Anspruch 1,
**dadurch gekennzeichnet, dass**
die erfassten Bilddaten ein zumindest teilweises Abbild einer Hand umfassen und die Geste einer Anzahl von gestreckten Fingern der Hand entspricht.

3. Verfahren gemäß einem der vorhergehenden Ansprüche,
**dadurch gekennzeichnet, dass**
ein Neigungswinkel des Objekts (31) bestimmt und eine Ausgleichstransformation für das Objekt (31) ausgeführt wird.

4. Verfahren gemäß einem der vorhergehenden Ansprüche,
**dadurch gekennzeichnet, dass**
eine Fläche des Objekts (31) bestimmt wird und das gemessene Abstandsprofil (37) anhand der bestimmten Fläche normiert wird.

5. Verfahren gemäß einem der vorhergehenden Ansprüche,
**dadurch gekennzeichnet, dass**
geometrische Profilmerkmale (35, 36) des gemessenen Abstandsprofils (37) bestimmt werden und die Geste anhand der geometrischen Profilmerkmale (35, 36) bestimmt wird.

6. Verfahren gemäß einem der vorhergehenden Ansprüche,
**dadurch gekennzeichnet, dass**
die Geste anhand eines Profilvergleichs bestimmt wird, bei dem das gemessene Abstandsprofil (37) mit einer Vielzahl von Referenz-Abstandsprofilen verglichen wird, wobei den Referenz-Abstandsprofilen jeweils eine Geste zugeordnet ist.

7. Verfahren gemäß Anspruch 6,
**dadurch gekennzeichnet, dass**
für die Referenz-Abstandprofile geometrische Referenzmerkmale bestimmt werden und der Profilvergleich anhand der Referenzmerkmale und der Profilmerkmale (35, 36) des gemessenen Abstandsprofils durchgeführt wird.

8. Verfahren gemäß Anspruch 6 oder 7,
**dadurch gekennzeichnet, dass**
zumindest zwei Extremwerte (35, 36) des gemessenen Abstandsprofils bestimmt werden und der Profilvergleich anhand der bestimmten Extremwerte (35, 36) des gemessenen Abstandsprofils (37) erfolgt.

9. Verfahren gemäß einem der Ansprüche 6 bis 8,
**dadurch gekennzeichnet, dass**
eine erste Ableitung des Abstandsprofils (37) bestimmt wird und der Profilvergleich anhand der bestimmten Ableitung erfolgt.

10. Verfahren gemäß einem der Ansprüche 6 bis 9,
**dadurch gekennzeichnet, dass**
der Profilvergleich anhand eines Maschinenlernverfahrens durchgeführt wird.

11. Verfahren gemäß einem der vorhergehenden Ansprüche,
**dadurch gekennzeichnet, dass**
die erfassten Bilddaten eine Folge von Bildern umfassen und eine Folge von gemessenen Abstandsprofilen (37) erzeugt wird, wobei die Geste anhand der Folge von gemessenen Abstandsprofilen (37) bestimmt wird.

12. Verfahren gemäß Anspruch 11,
**dadurch gekennzeichnet, dass**
die Geste eine Bewegung einer Hand umfasst.

**13.** Vorrichtung zum Erfassen einer Nutzereingabe anhand einer Geste, mit

einer Erfassungseinheit (4), durch die Bilddaten erfassbar sind, wobei die erfassten Bilddaten Bildpunkte umfassen und den Bildpunkten Distanzinformationen, welche zumindest mit einer Time-Of-Flight Kamera, einem Ultraschallsystem, einem Laserscanner oder einer Stereokamera erfasst werden, zugeordnet sind und die erfassten Bilddaten anhand der Distanzinformationen gefiltert werden;

einer Segmentierungseinheit (5), durch die anhand der gefilterten Bilddaten eine Segmentierung durchführbar ist, wobei ein Objekt (31) mit einer Umrisslinie (32) bestimmbar ist;

einer Profilberechnungseinheit (6), durch die anhand des Objekts (31) ein Referenzpunkt (33) bestimmbar ist, wobei für eine Vielzahl von Punkten auf der Umrisslinie (32) des Objekts (31) jeweils ein Abstand zu dem Referenzpunkt (33) bestimmbar ist und anhand der Abstände ein gemessenes Abstandsprofil (37) erzeugbar ist, wobei der Referenzpunkt (33) der geometrische Schwerpunkt des Objekts (31) ist;

einer Zuordnungseinheit (7), durch die anhand des gemessenen Abstandsprofils (37) eine Geste bestimmbar ist; und

einer Ausgabeeinheit (8), durch die anhand der bestimmten Geste ein Ausgabesignal erzeugbar und ausgebbar ist.

## Claims

**1.** Method for detecting a user input on the basis of a gesture, in which

image data are captured, the captured image data comprising picture elements and the picture elements having associated distance information, which is captured at least by a time-of-flight camera, an ultrasonic system, a laser scanner or a stereo camera, and the captured image data being filtered on the basis of the distance information;

the filtered image data are used to perform a segmentation, an object (31) being determined by an outline (32);

the object (31) is used to determine a reference point (33);

a distance from the reference point (33) is respectively determined for a multiplicity of points on the outline (32) of the object (31) and the distances are used to produce a measured distance profile (37), the reference point (33) being the geometric centroid of the object (31);

the measured distance profile (37) is used to determine a gesture; and

the gesture determined is used to generate and output an output signal.

**2.** Method according to Claim 1,
**characterized in that**
the captured image data comprise an at least partial depiction of a hand and the gesture corresponds to a number of extended fingers of the hand.

**3.** Method according to either of the preceding claims,
**characterized in that**
an angle of inclination of the object (31) is determined and an equalizing transformation is performed for the object (31).

**4.** Method according to one of the preceding claims,
**characterized in that**
a surface area of the object (31) is determined and the measured distance profile (37) is normalized on the basis of the determined surface area.

**5.** Method according to one of the preceding claims,
**characterized in that**
geometric profile features (35, 36) of the measured distance profile (37) are determined and the gesture is determined on the basis of the geometric profile features (35, 36).

**6.** Method according to one of the preceding claims,
**characterized in that**
the gesture is determined on the basis of a profile comparison in which the measured distance profile (37) is compared with a multiplicity of reference distance profiles, the reference distance profiles each having an associated gesture.

**7.** Method according to Claim 6,
**characterized in that**
geometric reference features are determined for the reference distance profiles and the profile comparison is performed on the basis of the reference features and the profile features (35, 36) of the measured distance profile.

**8.** Method according to Claim 6 or 7,
**characterized in that**
at least two extreme values (35, 36) of the measured distance profile are determined and the profile comparison is performed on the basis of the determined extreme values (35, 36) of the measured distance profile (37).

**9.** Method according to one of Claims 6 to 8,
**characterized in that**
a first derivative of the distance profile (37) is determined and the profile comparison is performed on the basis of the determined derivative.

**10.** Method according to one of Claims 6 to 9,
**characterized in that**
the profile comparison is performed on the basis of a machine learning method.

**11.** Method according to one of the preceding claims,
**characterized in that**
the captured image data comprise a series of images and a series of measured distance profiles (37) is produced, the gesture being determined on the basis of the series of measured distance profiles (37).

**12.** Method according to Claim 11,
**characterized in that**
the gesture comprises a movement of a hand.

**13.** Device for detecting a user input on the basis of a gesture, having

a capture unit (4), by which image data can be captured, the captured image data comprising picture elements and the picture elements having associated distance information, which is captured at least by a time-of-flight camera, an ultrasonic system, a laser scanner or a stereo camera, and the captured image data being filtered on the basis of the distance information;
a segmentation unit (5), by which a segmentation can be carried out on the basis of the filtered image data, it being possible to determine an object (31) by an outline (32);
a profile calculation unit (6), by which a reference point (33) can be determined on the basis of the object (31), it being possible to determine a distance from the reference point (33) respectively for a multiplicity of points on the outline (32) of the object (31) and to produce a measured distance profile (37) on the basis of the distances, the reference point (33) being the geometric centroid of the object (31);
an association unit (7), by which a gesture can be determined on the basis of the measured distance profile (37), and
an output unit (8), by which an output signal can be generated on the basis of the determined gesture and can be output.

**Revendications**

**1.** Procédé pour détecter une saisie d'utilisateur à l'aide d'un geste, avec lequel

des données d'image sont acquises, les données d'image acquise comprenant des pixels et des informations de distance, lesquelles sont acquises au moins avec une caméra à temps de vol, un système à ultrasons, un dispositif de balayage à laser ou une caméra stéréoscopique, sont associées aux pixels et les données d'image acquises sont filtrées à l'aide des informations de distance ;
une segmentation est effectuée à l'aide des données d'image filtrées, un objet (31) ayant une ligne de contour (32) étant déterminé ;
un point de référence (33) étant déterminé à l'aide de l'objet (31) ;
un écart par rapport au point de référence (33) est respectivement déterminé pour une pluralité de points sur la ligne de contour (32) de l'objet (31) et un profil d'écart (37) mesuré est généré à l'aide des écarts, le point de référence (33) étant le barycentre géométrique de l'objet (31) ;
un geste est déterminé à l'aide du profil d'écart (37) mesuré ; et
un signal de sortie est généré et délivré en sortie à l'aide du geste déterminé.

2. Procédé selon la revendication 1, **caractérisé en ce que** les images acquises comportent une représentation au moins partielle d'une main et le geste correspond à un nombre de doigts de la main tendus.

3. Procédé selon l'une des revendications précédentes, **caractérisé en ce qu'**un angle d'inclinaison de l'objet (31) est déterminé et une transformation de compensation est effectuée pour l'objet (31).

4. Procédé selon l'une des revendications précédentes, **caractérisé en ce qu'**une surface de l'objet (31) est déterminée et le profil d'écart (37) mesuré est normalisé à l'aide de la surface déterminée.

5. Procédé selon l'une des revendications précédentes, **caractérisé en ce que** des caractéristiques de profil géométriques (35, 36) du profil d'écart (37) mesuré sont déterminées et le geste est déterminé à l'aide des caractéristiques de profil géométriques (35, 36).

6. Procédé selon l'une des revendications précédentes, **caractérisé en ce que** le geste est déterminé à l'aide d'une comparaison de profil lors de laquelle le profil d'écart (37) mesuré est comparé à une pluralité de profils d'écart de référence, un geste étant respectivement associé aux profils d'écart de référence.

7. Procédé selon la revendication 6, **caractérisé en ce que** des caractéristiques géométriques de référence sont déterminées pour les profils d'écart de référence et la comparaison de profil est effectuée à l'aide des caractéristiques de référence et des caractéristiques de profil (35, 36) du profil d'écart mesuré.

8. Procédé selon la revendication 6 ou 7, **caractérisé en ce qu'**au moins deux valeurs extrêmes (35, 36) du profil d'écart mesuré sont déterminées et la comparaison de profil est effectuée à l'aide des valeurs extrêmes (35, 36) du profil d'écart (37) mesuré.

9. Procédé selon l'une des revendications 6 à 8, **caractérisé en ce qu'**une première dérivée du profil d'écart (37) est déterminée et la comparaison de profil est effectuée à l'aide de la dérivée déterminée.

10. Procédé selon l'une des revendications 6 à 9, **caractérisé en ce que** la comparaison de profil est effectuée à l'aide d'un procédé d'apprentissage automatique.

11. Procédé selon l'une des revendications précédentes, **caractérisé en ce que** les données d'image acquises comprennent une séquence d'images et une séquence de profils d'écart (37) mesurés, le geste étant déterminé à l'aide de la séquence de profils d'écart (37) mesurés.

12. Procédé selon la revendication 11, **caractérisé en ce que** le geste comprend un mouvement de la main.

13. Dispositif pour détecter une saisie d'utilisateur à l'aide d'un geste, comprenant

une unité d'acquisition (4), par laquelle peuvent être acquises des données d'image, les données d'image acquise comprenant des pixels et des informations de distance, lesquelles sont acquises au moins avec une caméra à temps de vol, un système à ultrasons, un dispositif de balayage à laser ou une caméra stéréoscopique, sont associées aux pixels et les données d'image acquises sont filtrées à l'aide des informations de distance ;
une unité de segmentation (5), par laquelle une segmentation peut être effectuée à l'aide des données d'image filtrées, un objet (31) ayant une ligne de contour (32) pouvant être déterminé ;
une unité de calcul de profil (6), par laquelle un point de référence (33) peut être déterminé à l'aide de l'objet (31), un écart par rapport au point de référence (33) pouvant respectivement être déterminé pour une pluralité de points sur la ligne de contour (32) de l'objet (31) et un profil d'écart (37) mesuré pouvant être généré à l'aide des écarts, le point de référence (33) étant le barycentre géométrique de l'objet (31) ;
une unité d'attribution (7), par laquelle un geste peut être déterminé à l'aide du profil d'écart (37) mesuré ; et
une unité de sortie (8), par laquelle un signal de sortie peut être généré et délivré en sortie à l'aide du geste déterminé.

FIG. 1

FIG. 2

FIG. 3A

FIG. 3B

FIG. 4A

FIG. 4B

FIG. 5A

FIG. 5B

FIG. 6A

FIG. 6B

FIG. 7A

FIG. 7B

FIG. 8A

FIG. 8B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4438643 A1
- DE 19802261 A1
- DE 102015103022 A1
- DE 602004004048 T2
- WO 2012088702 A1
- WO 2013085525 A1